(19) Europäisches Patentamt
European Patent Office
Office européen des brevets

(11) **EP 4 391 297 A1**

(12) **DEMANDE DE BREVET EUROPEEN**

(43) Date de publication:
**26.06.2024 Bulletin 2024/26**

(21) Numéro de dépôt: **23213207.6**

(22) Date de dépôt: **30.11.2023**

(51) Classification Internationale des Brevets (IPC):
*H02J 9/06* (2006.01)          *H02M 1/42* (2007.01)
*H02M 3/335* (2006.01)

(52) Classification Coopérative des Brevets (CPC):
**H02J 9/062; H02J 9/06; H02M 1/009;
H02M 1/4233; H02M 3/33584**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **22.12.2022 FR 2214316**

(71) Demandeur: **COMMISSARIAT À L'ÉNERGIE
ATOMIQUE ET AUX
ÉNERGIES ALTERNATIVES
75015 Paris (FR)**

(72) Inventeurs:
• **PERICHON, Pierre
  38054 GRENOBLE Cedex 09 (FR)**
• **LANNELUC, Charley
  38054 GRENOBLE Cedex 09 (FR)**
• **STERNA, Léo
  38054 GRENOBLE Cedex 09 (FR)**

(74) Mandataire: **Atout PI Laplace
Immeuble Up On
25 Boulevard Romain Rolland
CS 40072
75685 Paris Cedex 14 (FR)**

(54) **CIRCUIT D'ALIMENTATION SANS INTERRUPTION**

(57) L'invention concerne un circuit d'alimentation sans interruption en forme de convertisseur à double pont actif comprenant de premières bornes configurées pour être connectées à un premier réseau électrique alternatif, de deuxièmes bornes configurées pour être connectées à un deuxième réseau électrique alternatif, de troisièmes bornes configurées pour être connectées à une source de tension continue, le circuit d'alimentation sans interruption comprenant en outre un transformateur comportant un primaire et un premier secondaire, une première branche électrique comportant ledit primaire, la première branche électrique étant connectée à un premier circuit d'interrupteurs configuré pour permettre un échange d'énergie avec les premières bornes par l'intermédiaire dudit primaire, et une deuxième branche électrique comportant ledit premier secondaire, ladite deuxième branche électrique étant connectée à un deuxième circuit d'interrupteurs configuré pour permettre un échange d'énergie avec les deuxièmes bornes par l'intermédiaire dudit premier secondaire. La première branche électrique comprend une première inductance connectée en série avec ledit primaire, la deuxième branche électrique comprend une deuxième inductance connectée en série avec ledit premier secondaire, ledit transformateur comprend en outre un deuxième secondaire, un troisième circuit d'interrupteurs étant connecté audit deuxième secondaire et étant configuré pour permettre un échange d'énergie avec les troisièmes bornes par l'intermédiaire dudit deuxième secondaire, de manière à permettre des échanges d'énergie entre le premier réseau électrique alternatif et la source de tension continue et entre la source de tension continue et le deuxième réseau électrique alternatif.

FIG 1

**Description**

L'invention concerne un circuit d'alimentation sans interruption, notamment un circuit d'alimentation sans interruption configuré pour alimenter un deuxième réseau électrique alternatif à partir d'un premier réseau électrique alternatif, et en cas de défaillance du premier réseau électrique alternatif, alimenter le deuxième réseau électrique alternatif à partir d'une source de tension continue.

Les alimentations sans interruption ou ASI, encore appelées UPS (pour « Uninterruptible power supply » en anglais) sont des dispositifs électriques destinés à permettre une continuité de service en cas de coupure dans l'alimentation électrique d'un système électrique à partir d'un réseau électrique. En faisant l'interface entre le réseau électrique et le système, l'alimentation sans interruption peut aussi améliorer la qualité de l'énergie offerte par le réseau électrique. Parmi les systèmes utilisant les ASIs, on compte les banques, les hôpitaux, les universités, ou des centres informatiques (« data center » en anglais).

Typiquement, un ASI est configuré pour réaliser deux conversions électriques. Dans un fonctionnement normal, l'ASI met en oeuvre une conversion alternative-alternative (AC/AC) dans laquelle une énergie prélevée sur le réseau électrique alternatif est délivrée au système électrique alternatif. En cas de défaillance du réseau électrique alternatif, une conversion continue-alternative (DC/AC) est mise en oeuvre entre une source de tension continue, telle qu'une batterie, et le système électrique alternatif de manière à poursuivre l'alimentation du système électrique alternatif.

Typiquement, la source de tension continue est rechargeable. Son niveau de tension doit être suffisant pour permettre l'alimentation du système électrique alternatif, au moins pendant une période transitoire. Généralement, la source de tension continue est rechargeable par l'intermédiaire d'un chargeur électrique indépendant, qui va charger la source de tension continue à partir du premier réseau électrique alternatif. Pour assurer une alimentation du système électrique alternatif en cas de panne du réseau électrique alternatif, il faut donc un circuit d'ASI et un circuit de chargeur électrique. Or, dans un contexte de réduction des couts et d'amélioration de l'efficacité, il serait avantageux de limiter le nombre de composants électriques requis.

Il est donc recherché une solution permettant de limiter les composants électriques dans l'utilisation d'une alimentation sans interruption permettant une alimentation par une source de tension continue de secours, et d'un chargeur électrique destiné à charger la source de tension continue de secours.

A cet effet, l'invention propose un circuit d'alimentation sans interruption en forme de convertisseur à double pont actif comprenant de premières bornes configurées pour être connectées à un premier réseau électrique alternatif, de deuxièmes bornes configurées pour être connectées à un deuxième réseau électrique alternatif, de troisièmes bornes configurées pour être connectées à une source de tension continue, le circuit d'alimentation sans interruption comprenant en outre :

i. un transformateur comportant un primaire et un premier secondaire ;

ii. une première branche électrique comportant ledit primaire, la première branche électrique étant connectée à un premier circuit d'interrupteurs configuré pour permettre un échange d'énergie avec les premières bornes par l'intermédiaire dudit primaire ; et

iii. une deuxième branche électrique comportant ledit premier secondaire, ladite deuxième branche électrique étant connectée à un deuxième circuit d'interrupteurs configuré pour permettre un échange d'énergie avec les deuxièmes bornes par l'intermédiaire dudit premier secondaire ;

circuit d'alimentation sans interruption, dans lequel :

i. la première branche électrique comprend une première inductance connectée en série avec ledit primaire ;

ii. la deuxième branche électrique comprend une deuxième inductance connectée en série avec ledit premier secondaire ;

iii. ledit transformateur comprend en outre un deuxième secondaire, un troisième circuit d'interrupteurs étant connecté audit deuxième secondaire et étant configuré pour permettre un échange d'énergie avec les troisièmes bornes par l'intermédiaire dudit deuxième secondaire ;

de manière à permettre des échanges d'énergie entre le premier réseau électrique alternatif et la source de tension continue et entre la source de tension continue et le deuxième réseau électrique alternatif.

Grâce à la première inductance, à la deuxième inductance, et au deuxième secondaire, une alimentation du deuxième réseau électrique alternatif par le premier réseau électrique alternatif peut s'effectuer en transférant l'énergie du premier réseau électrique alternatif à la source de tension continue, puis de la source de tension continue au deuxième réseau électrique alternatif. La source de tension continue sert à stocker transitoirement l'énergie circulant du premier réseau électrique alternatif au second réseau électrique alternatif. A cette occasion, une partie de l'énergie peut alors être utilisée pour charger la source de tension continue. Ainsi, le chargeur électrique est intégré à l'alimentation sans interruption. On s'épargne donc l'utilisation d'un chargeur électrique indépendant. En particulier, grâce à la première inductance, à la deuxième inductance, et au deuxième secondaire, le circuit d'alimentation sans interruption est configuré pour permettre un échange d'énergie entre le premier réseau électrique et la source de tension continue, et entre le deuxième réseau électrique et la source de tension continue. D'un point de vue fonctionnel, on peut considérer qu'en cas d'échange d'énergie entre le premier et le deuxième réseau électrique alternatif, il s'effectue par l'intermédiaire de la source de tension continue.

Selon un mode de réalisation, le circuit d'alimentation est configuré de sorte que les circuits d'interrupteurs sont commandés par décalages de phase, lesdits échanges d'énergie étant fonction des décalages de phase entre le premier, le deuxième, et le troisième circuits.

Selon un mode de réalisation, le circuit d'alimentation sans interruption est configuré de sorte qu'une tension aux deuxièmes bornes du circuit d'alimentation sans interruption est déterminée par un décalage de phase entre le troisième circuit et le deuxième circuit.

Selon un mode de réalisation, le circuit d'alimentation sans interruption est configuré de sorte qu'une tension aux troisièmes bornes du circuit d'alimentation sans interruption et/ou un courant aux premières bornes du circuit d'alimentation sans interruption sont déterminés par un décalage de phase entre le premier circuit et le troisième circuit.

Selon un mode de réalisation, le circuit d'alimentation sans interruption comprend une unité de commande configurée pour déterminer lesdits décalages de phase et commander lesdits interrupteurs en fonction desdits décalages de phase.

Selon une variante, ladite unité de commande comprend :

i. un premier bloc de contrôle configuré pour délivrer une puissance de consigne aux troisièmes bornes du circuit d'alimentation sans interruption ;

ii. un deuxième bloc de contrôle configuré pour déterminer un courant de consigne aux premières bornes du circuit d'alimentation sans interruption en fonction de la dite puissance de consigne et d'une tension instantanée aux premières bornes du circuit d'alimentation sans interruption ;

iii. un troisième bloc de contrôle configuré pour déterminer un décalage de phase entre le premier et le troisième circuit en fonction d'une différence entre le courant de consigne et un courant instantané aux premières bornes du circuit d'alimentation sans interruption.

Selon une variante, le premier bloc de contrôle est configuré pour délivrer une première puissance de consigne aux troisièmes bornes du circuit d'alimentation sans interruption en fonction d'une différence entre une tension de consigne et une tension instantanée aux troisièmes bornes du circuit d'alimentation sans interruption.

Selon une variante, le premier bloc de contrôle est configuré pour délivrer une deuxième puissance de consigne en fonction d'une puissance à injecter aux premières bornes du circuit d'alimentation sans interruption.

Selon une variante, le premier bloc de contrôle est configuré pour délivrer la première puissance de consigne en cas d'un échange d'énergie des premières bornes vers les troisièmes bornes ; et pour délivrer la deuxième puissance de consigne en cas d'un échange d'énergie des troisièmes bornes vers les premières bornes.

Selon une variante :

i. le premier bloc de contrôle a une fréquence de mise à jour plus petite, notamment au moins dix fois plus faible, qu'une fréquence du premier réseau électrique alternatif ; et

ii. le deuxième et le troisième bloc de contrôle ont des fréquences de mise à jour supérieures, notamment au moins vingt fois supérieures, à une fréquence du premier réseau alternatif.

Selon une variante, ladite unité de commande comprend un quatrième bloc de contrôle configuré pour déterminer le décalage de phase entre le troisième circuit et le deuxième circuit en fonction d'une différence entre une tension de consigne aux deuxièmes bornes du circuit d'alimentation sans interruption et une tension instantanée aux deuxièmes bornes du circuit d'alimentation sans interruption.

Selon une variante, ladite unité de commande est configurée de manière à commander deux des trois circuits d'interrupteurs avec des décalages de phase par rapport au circuit d'interrupteur restant, dit « circuit de référence ».

Selon un mode de réalisation, les interrupteurs des premier, deuxième, et troisième circuits forment respectivement un pont complet d'interrupteurs ou un demi-pont d'interrupteurs.

D'autres caractéristiques et avantages de la présente invention apparaîtront mieux à la lecture de la description qui suit en relation aux figures annexées suivantes :

[Fig. 1] : la figure 1 représente un circuit d'alimentation sans interruption selon un exemple de l'invention ;

[Fig. 2] : la figure 2 représente un schéma électrique simplifié du circuit d'alimentation sans interruption illustré en figure 1 ;

[Fig. 3] : la figure 3 représente un exemple d'unité de commande du circuit d'alimentation sans interruption de la figure 1 ;

[Fig. 4] : la figure 4 représente les évolutions au cours du temps de courants et de tensions parcourant un exemple de circuit d'alimentation comprenant l'unité de commande de la figure 3 ;

[Fig. 5] : la figure 5 représente un autre exemple d'unité de commande du circuit d'alimentation sans interruption de la figure 1 ;

[Fig. 6] : la figure 6 représente les évolutions au cours du temps de courants et de tensions parcourant un exemple de circuit d'alimentation comprenant l'unité de commande de la figure 5.

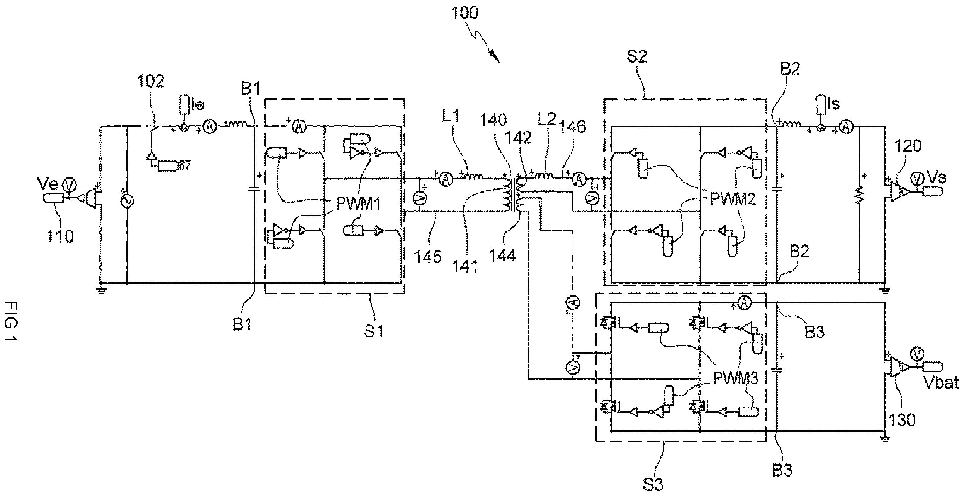

La figure 1 présente un circuit d'alimentation sans interruption 100 selon un exemple de l'invention. Le circuit d'alimentation 100 comprend de premières bornes B1 qui sont configurées pour être connectées à un premier réseau électrique alternatif 110 ayant une tension Ve. Le circuit d'alimentation 100 comprend également de deuxièmes bornes B2 configurées pour être connectées à un deuxième réseau électrique alternatif 120 ayant une tension Vs. Des troisièmes bornes B3 sont configurées pour être connectées à une source de tension continue 130 ayant une tension Vbat. Typiquement, la fonction du circuit d'alimentation 100 est de permettre une alimentation du deuxième réseau électrique alternatif 120 à partir du premier réseau électrique alternatif 110. Et en cas de défaillance, permettre une alimentation de secours du deuxième réseau électrique 120 à partir de la source de tension continue 130. En particulier, la source de tension continue 130 est rechargeable. Elle forme notamment une alimentation temporaire, le temps qu'une source électrique robuste soit mise en route, telle qu'un groupe électrogène par exemple. La source de tension continue 130 peut être, entre autres, une batterie, comme par exemple une batterie lithium/plomb, ou une super capacité. La batterie peut être embarquée dans un rack du circuit d'alimentation sans interruption.

Le circuit d'alimentation 100 est en forme d'un convertisseur à double pont actif (ou « Dual active Bridge » en anglais). Les inventeurs ont découvert qu'une telle topologie connue en soi est particulièrement avantageuse pour l'implémentation d'un circuit d'alimentation à résonance, notamment en ce qu'elle permet d'intégrer une fonction de charge de la source de tension continue 130 dans le circuit d'alimentation sans interruption 100. En particulier, la topologie de convertisseur à double pont actif permet une conversion AC/AC directe sans nécessité de redressement intermédiaire en entrée ou en sortie du circuit d'alimentation sans interruption ; et un fonctionnement en commutation résonante, qui réduit fortement les pertes par commutation. Ainsi, le circuit sans interruption selon l'invention présente un rendement amélioré par rapport à l'art antérieur, notamment supérieur à 97%. En outre, le fonctionnement en commutation résonante permet une commutation à très haute fréquence des interrupteurs, par exemple supérieure à 100kHz. Alors qu'un circuit d'alimentation sans interruption de l'art antérieur commute typiquement à une fréquence comprise entre 20 et 50kHz. Grâce à ce fonctionnement à très haute fréquence, l'encombrement du circuit d'alimentation sans interruption peut être réduit par rapport à l'art antérieur.

Le circuit d'alimentation 100 comprend un transformateur 140 qui comporte un primaire 141 et un premier secondaire 142. Le primaire 141 du transformateur 140 fait partie d'une première branche électrique 145 connectée, notamment à ses bornes, à un premier circuit d'interrupteurs S1. Le premier secondaire 142 fait partie d'une deuxième branche électrique 146 connectée, notamment à ses bornes, à un deuxième circuit d'interrupteurs S2. Un deuxième secondaire 144 est connecté à un troisième circuit d'interrupteurs S3. En déterminant le courant circulant dans la première branche électrique 145, le premier circuit d'interrupteurs S1 permet de contrôler l'énergie échangée entre les premières bornes B1 et le reste du circuit d'alimentation sans interruption 100, notamment entre le premier réseau alternatif 110 et le reste du circuit d'alimentation sans interruption 100. De même, le deuxième circuit d'interrupteurs S2 permet de contrôler l'énergie échangée entre les deuxièmes bornes B2 et le reste du circuit d'alimentation sans interruption 100, notamment entre le deuxième réseau électrique alternatif 120 et le reste du circuit sans interruption 100. Le troisième circuit d'interrupteurs S3 permet de contrôler l'énergie échangée entre les troisièmes bornes B3 et le reste du circuit d'alimentation sans interruption 100, notamment entre la source de tension continue 130 et le reste du circuit d'alimentation 100.

Dans la première branche électrique 145, une première inductance L1 est en série avec le primaire 141 ; et dans la deuxième branche électrique 146, une deuxième inductance L2 est en série avec le premier secondaire 142. Les première L1 et deuxième L2 inductances permettent d'intercaler la source de tension continue 130 dans le chemin de l'énergie entre le premier réseau électrique alternatif 110 et le deuxième réseau électrique alternatif 120. La source de tension continue 130 permet ainsi de stocker transitoirement de l'énergie entre le premier réseau électrique alternatif 110 et le deuxième réseau électrique alternatif 120.

Cette architecture de circuit permet de contrôler indépendamment un échange d'énergie entre le primaire 141 et le deuxième secondaire 144 d'une part et d'autre part entre le deuxième secondaire 144 et le premier secondaire 142. Ainsi, une portion de l'énergie reçue par la source de tension continue 130 peut être utilisée pour charger la source de tension continue 130.

L'exemple d'alimentation sans interruption 100 comprend des ampèremètres A et des voltmètres V qui sont optionnels et permettent d'obtenir des mesures de courant et de tension dans le circuit 100. Le circuit d'alimentation sans interruption 100 peut comprendre des capacités ou des inductances de filtrage entre d'une part le premier réseau électrique 110, le deuxième réseau électrique 120, et la source de tension continue 130 et d'autre part les bornes B1, B2, B3 respectives du circuit d'alimentation sans interruption 100 auxquelles ils ont connectés. Ces éléments de filtrage forment notamment des filtres CEM (pour « compatibilité électromagnétique ») pour respecter les normes d'émission de perturbations électromagnétiques vis-à-vis des dispositifs environnants. Le fonctionnement résonnant du circuit d'alimentation sans interruption selon l'invention permet de réduire les perturbations CEM émises, et donc la taille des filtres CEM.

Les interrupteurs des premier S1, deuxième S2, et troisième S3 circuits d'interrupteurs sont agencés en pont complet. Ainsi, chaque circuit d'interrupteur S1, S2, S3 comprend deux bras d'interrupteurs connectés entre ses bornes B1, B2, B3 respectives. Dans les premier S1 et deuxième S2 circuits d'interrupteurs, la banche électrique 145, 146 est connectée aux points milieux des deux bras. Dans le troisième circuit d'interrupteurs S3, le deuxième secondaire 144 est connecté aux points milieux des bras. Cependant, un autre agencement d'interrupteurs est envisageable. Par exemple, les interrupteurs pourraient être agencés en demi-pont, un bras d'interrupteurs étant notamment remplacé par un bras de capacités. Les interrupteurs des premier S1 et deuxième S2 circuits sont de préférence bidirectionnels de manière à permettre une commutation directe du courant alternatif, permettant ainsi de se passer d'un étage de redressement. Les interrupteurs du troisième circuit S3 peuvent être unidirectionnels, ce qui serait suffisant pour le fonctionnement avec la source de tension continue 130. Les interrupteurs sont notamment des interrupteurs semi-conducteurs, comme par exemple en technologie GaN ou SiC. Les composants en technologie GaN ou SiC sont rapides et bien adaptés au fonctionnement haute fréquence. Des composants en technologie Silicium sont également possibles, bien que possiblement avec une dégradation du rendement.

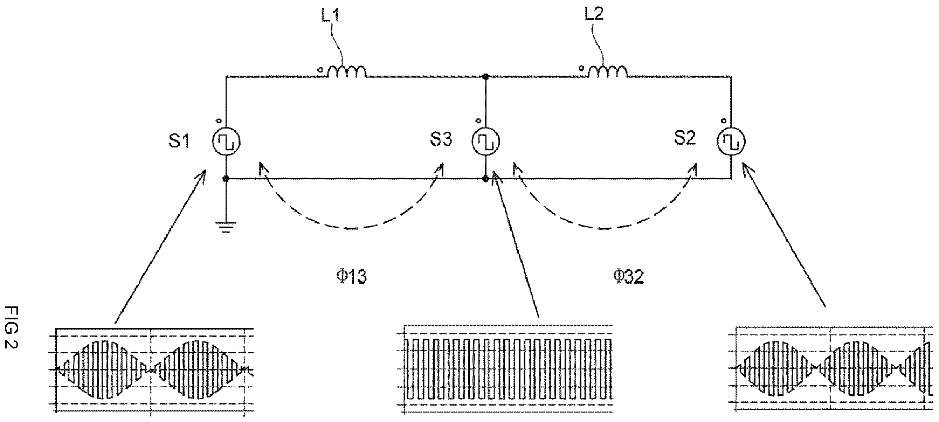

Afin de contrôler les échanges d'énergie dans le circuit d'alimentation sans interruption 100, les interrupteurs des premier S1, deuxième S2, et troisième S3 circuits d'interrupteurs sont de préférence commandés par décalage de phase. La figure 2 présente un schéma électrique simplifié du circuit d'alimentation électrique 100. La première inductance L1 forme une inductance de résonance d'entrée et la deuxième inductance forme une inductance de résonance de sortie L2. Le deuxième secondaire 144 et le troisième circuit d'interrupteurs S3 forment un circuit intermédiaire entre d'une part le primaire 141 et le premier circuit d'interrupteurs S1 et d'autre part le premier secondaire 142 et le deuxième circuit d'interrupteurs S2. Les graphes dans la partie basse de la figure 2 représentent respectivement le courant circulant dans le primaire 141 qui est connecté au premier circuit d'interrupteurs S1, le deuxième secondaire 144 qui est connecté au troisième circuit S3, et le premier secondaire 142 qui est connecté au deuxième circuit d'interrupteurs S2. Notamment, les interrupteurs des circuits d'interrupteurs S1, S2, S3 sont commandés avec une même fréquence de découpage et un même rapport cyclique. La fréquence de découpage est par exemple comprise entre 100 et 500kHz, notamment égale à 100kHz. Le rapport cyclique est par exemple $\frac{1}{2}$.

Notamment, le décalage de phase $\Phi_{13}$ entre le premier circuit d'interrupteurs S1 et le troisième circuit d'interrupteurs S3 détermine la tension aux troisièmes bornes B3, c'est-à-dire la tension continue Vbat de la source de tension continue 130. En outre, ce décalage de phase $\Phi_{13}$ détermine notamment le courant circulant par les premières bornes B1 du circuit d'alimentation sans interruption S1. En particulier, lors du fonctionnement du circuit d'alimentation sans interruption 100, le courant circulant par les premières bornes B1 est régulé de sorte à être en phase avec la tension Ve délivrée par le premier réseau électrique 110. En particulier, le décalage de phase $\Phi_{32}$ entre le troisième circuit d'interrupteurs S3 et le deuxième circuit d'interrupteurs S2 détermine la tension aux deuxièmes bornes B2, c'est-à-dire la tension alternative Vs du deuxième réseau électrique alternatif 120.

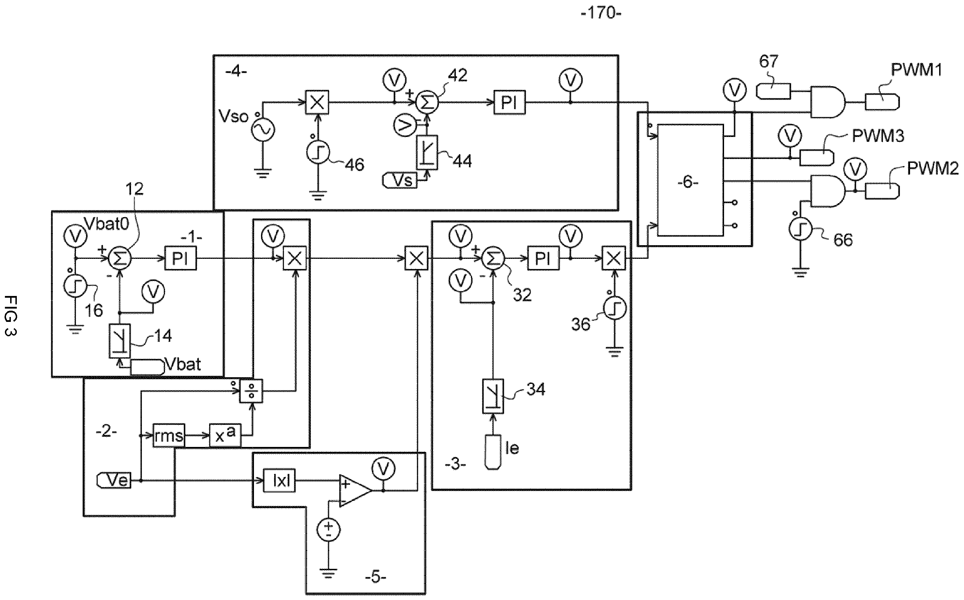

Afin de contrôler les interrupteurs, l'alimentation sans interruption 100 comprend notamment une unité de commande 170 représentée schématiquement en figure 3. L'unité de commande 170 met notamment en oeuvre une modulation par largeur d'impulsion (ou PWM pour « Pulse Width Modulation »), en délivrant des signaux d'ouverture/fermeture aux interrupteurs des circuits d'interrupteurs S1, S2, S3.

L'unité de commande 170 comprend une unité de traitement 6 qui délivre des signaux PWM1, PWM2, PWM3 respectivement aux premier S1, deuxième S2, et troisième S3 circuits d'interrupteurs. L'unité de traitement 6 est notamment une unité électronique, telle qu'un microcontrôleur par exemple. L'unité de traitement 6 calcule les signaux PWM1, PWM2, PWM3 à partir de décalages de phase déterminés par des blocs de contrôle 1-5 décrites dans ce qui suit.

Un premier bloc de contrôle 1 détermine une puissance de consigne à délivrer aux troisièmes bornes B3. Le premier bloc de contrôle 1 forme notamment une boucle de régulation. A cet effet, une unité 12 calcule une différence entre une tension de consigne $V_{bat0}$ et une tension instantanée Vbat aux troisièmes bornes B3. Une telle tension de consigne $V_{bat0}$ correspond à une tension nominale de la source de tension continue 130, qui est notamment nécessaire pour assurer sa fonction d'alimentation de secours. La tension instantanée Vbat peut être mesurée entre les troisièmes bornes B3. A partir de cette différence, la puissance de consigne, c'est-à-dire la puissance devant être délivrée à la source de tension continue 130 pour obtenir une tension de consigne $V_{bat0}$ à ses bornes, est déterminée, notamment à l'aide d'un correcteur proportionnel intégral PI. La tension instantanée Vbat peut être filtrée par un filtre passe-bas 14 pour améliorer la qualité du bloc de contrôle 1. Un circuit d'activation 16 peut être utilisé pour activer le bloc 1 lorsque la source de tension continue 130 doit être utilisée par le circuit d'alimentation sans interruption 100.

Un deuxième bloc de contrôle 2 détermine un courant de consigne à obtenir aux premières bornes B1 à partir de la puissance de consigne délivrée par le premier bloc 1 et de la tension Ve instantanée entre les premières bornes B1, c'est-à-dire la tension délivrée par le premier réseau électrique 110. Le deuxième bloc 2 obtient le courant de consigne en divisant la puissance de consigne par la tension efficace au carré et en la multipliant par la tension instantanée Ve, la tension efficace étant obtenue à partir de la tension instantanée Ve. Le courant de consigne est déterminé de sorte à être en phase avec la tension Ve entre les premières bornes B1, et ainsi corriger un facteur de puissance à l'entrée du circuit d'alimentation sans interruption 100.

Un troisième bloc de contrôle 3 détermine le décalage de phase $\Phi_{13}$ entre le premier S1 et le troisième S3 circuit. Le troisième bloc de contrôle 3 forme notamment une boucle de régulation. A cet effet, une unité 32 calcule une différence entre le courant de consigne délivré par le deuxième bloc 2 et un courant instantané le aux premières bornes B1. Le courant instantané le peut être mesuré à l'une des premières bornes B1. Le décalage de phase $\Phi_{13}$ est déterminé à partir de cette différence, notamment à l'aide d'un correcteur proportionnel intégral PI. Le courant instantané le peut être filtré par un filtre passe-bas 34 pour améliorer la qualité du bloc de contrôle 2. Un circuit d'activation 36 peut être utilisé pour activer le deuxième bloc 2 lorsque le premier réseau électrique alternatif 110 doit être utilisé par le circuit d'alimentation sans interruption 100.

Le décalage de phase $\Phi_{13}$ entre le premier S1 et le troisième S3 circuit est donc déterminé à partir de deux dynamiques. L'une est mise en oeuvre par le premier bloc de contrôle 1 et vise à réguler la tension entre les troisièmes bornes B3, c'est-à-dire la tension Vbat aux bornes de la source de tension continue 130. Une autre dynamique est mise en oeuvre par le deuxième bloc de contrôle 2, qui vise à assurer une correction du facteur de puissance aux premières bornes B1 du circuit d'alimentation sans interruption 100. Le troisième bloc 3 qui vise à ajuster le courant aux premières bornes B1 peut être mis à jour à la même fréquence que le deuxième bloc de contrôle 2. En particulier, le premier bloc de contrôle 1 a une fréquence de mise à jour plus lente que celle du deuxième 2 et du troisième 3 bloc, ce qui permet un fonctionnement parallèle de ces deux dynamiques.

En outre, le premier bloc de contrôle 1 a de préférence une fréquence de mise à jour plus faible que la fréquence du premier réseau électrique alternatif 110. Le deuxième 2 et le troisième 3 bloc de contrôle ont de préférence des fréquences de mise à jour plus élevées que la fréquence du premier réseau électrique alternatif 110. Ceci afin d'assurer que la courant délivré par le premier réseau électrique alternatif 110 est bien en phase avec la tension.

Notamment, le premier bloc de contrôle 1 a une fréquence de mise à jour au moins dix fois plus faible, voire 100 à 1000 fois plus faible, que la fréquence du premier réseau électrique alternatif 110. Le deuxième 2 et le troisième 3 bloc de contrôle ont notamment des fréquences de mise à jour au moins vingt fois, voire au moins cent fois, supérieures à la fréquence du premier réseau électrique alternatif 110.

Un bloc de contrôle supplémentaire 5 peut être intercalé entre le deuxième bloc 2 et le troisième bloc 3. Ce bloc supplémentaire 3 est connu en soi, et vise à éviter de potentiels disfonctionnements lors du passage à zéro de la tension Ve délivrée par le premier réseau électrique alternatif 110. A cet effet, lorsque la tension Ve devient inférieure à un premier seuil de tension, la valeur en sortie est tirée à zéro. Lorsque la tension Ve devient supérieure à un deuxième seuil de tension, le bloc 5 est mis en sommeil. Par exemple, pour un premier réseau électrique alternatif 110 de tension efficace 230V, le premier et le deuxième seuil sont compris entre 10 et 20V. Les premier et deuxième seuils sont en particulier égaux.

L'unité de commande 170 comprend notamment un quatrième bloc de contrôle 4, qui détermine le décalage de phase $\Phi_{32}$ entre le troisième S3 et le deuxième S2 circuit. Le quatrième bloc de contrôle 4 forme notamment une boucle de régulation. A cet effet, une unité 42 calcule une différence entre une tension de consigne $V_{S0}$ aux deuxièmes bornes B2, c'est-à-dire une tension de consigne du deuxième réseau électrique alternatif 120, et une tension instantanée $V_S$ aux deuxièmes bornes B2. La tension instantanée $V_S$ peut être mesurée entre les deuxièmes bornes B2. Le décalage

de phase $\Phi_{32}$ est déterminé à partir de cette différence, notamment à l'aide d'un correcteur proportionnel intégral PI. La tension instantanée $V_S$ peut être filtrée par un filtre passe-bas 44 pour améliorer la qualité du bloc de contrôle 4. Un circuit d'activation 46 peut être utilisé pour activer le quatrième bloc 4 lorsque le deuxième réseau électrique alternatif 120 doit être utilisé par le circuit d'alimentation sans interruption 100.

L'unité de traitement 6 détermine les signaux de modulation PWM1, PWM2, PWM3 à partir des décalages de phase $\Phi_{13}$, $\Phi_{32}$ déterminés par les blocs de contrôle, avec une fréquence de découpage. Les commandes des circuits d'interrupteurs S1-S3 peuvent être réalisées en prenant le troisième circuit d'interrupteur S3 comme référence de phase. Cependant, la référence de phase peut être un autre des circuits d'interrupteurs. Par exemple, si le premier circuit d'interrupteurs S1 est le circuit de référence, les signaux PWM1, PWM2, PWM3 délivrés au premier circuit S1, au deuxième circuit S2, et au troisième circuit S3 peuvent être comme suit :

[Math 1]

$$PWM1 = sign(\sin(W_d \times t))$$

[Math 2]

$$PWM3 = sign(\sin(W_d \times t - \Phi_{13}))$$

[Math 3]

$$PWM2 = sign(\sin(W_d \times t - \Phi_{12}))$$

Où t est le temps en secondes, $W_d$ est la pulsation de découpage, sign est la fonction qui retourne la valeur du signe de son argument, et $\Phi_{12}$ est le déphasage entre le premier circuit d'interrupteurs S1 et le deuxième circuit d'interrupteurs S2 tel que

[Math 4]

$$\Phi_{12} = \Phi_{13} + \Phi_{32}$$

Un circuit d'activation 66 peut être utilisé pour activer la transmission du signal de modulation PWM2 au deuxième circuit d'interrupteurs S2 lorsque le deuxième réseau électrique alternatif 120 doit être utilisé par le circuit d'alimentation sans interruption 100.

Un signal 67 peut être utilisé pour inhiber la transmission du signal de modulation PWM1 au premier circuit d'interrupteurs S1 lorsque le premier réseau électrique alternatif 110 n'est pas disponible. Comme illustré par exemple en figure 1, ce même signal 67 peut être utilisé pour ouvrir un interrupteur 102 de manière à déconnecter le premier réseau électrique alternatif 110 des premières bornes B1 du circuit d'alimentation 100. Ceci est notamment le cas lorsque le premier réseau électrique 110 est défaillant.

Dans l'unité de commande 170, les circuits d'activation 16, 36, 46, 66 sont particulièrement utiles pour permettre un séquençage du démarrage du circuit d'alimentation sans interruption 100. Ils permettent donc notamment d'activer les éléments du circuit d'alimentation 100 dans le bon ordre.

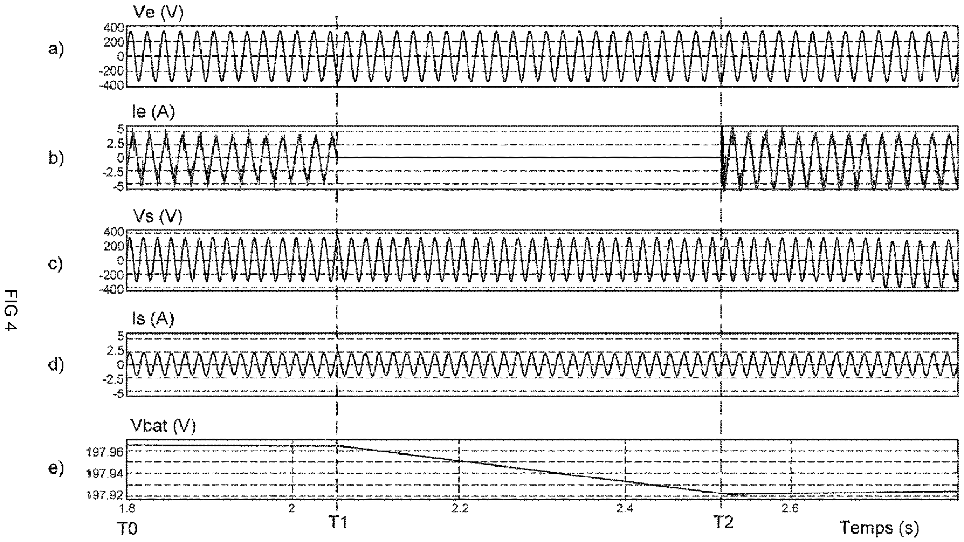

La figure 4 représente un exemple de courants et de tensions parcourant le circuit d'alimentation 100 lors de son fonctionnement. Le graphe a) représente la tension Ve du premier réseau électrique alternatif 110. Le graphe b) représente le courant Ie circulant dans les premières bornes B1 du circuit d'alimentation sans interruption 100. Le graphe c) représente la tension Vs délivrée au deuxième réseau électrique alternatif 120. Le graphe d) représente le courant $I_S$ circulant dans les deuxièmes bornes B2 du circuit d'alimentation sans interruption 100. Le graphe e) représente la tension Vbat de la source de tension continue 130.

Entre les instants T0 et T1, le premier réseau électrique alternatif 110 est connecté au circuit d'alimentation sans interruption 100 et lui délivre une tension Ve alternative. La tension Ve délivrée par le premier réseau électrique alternatif 110 se caractérise par exemple par une tension crête de 325 V ou une tension efficace de 230V pour une fréquence de 50Hz. Le courant d'entrée Ie est régulé de manière à être en phase avec la tension Ve délivrée par le premier réseau électrique alternatif 110 et à permettre une tension Vbat sensiblement constante, par exemple environ 198V, aux bornes de la source de tension continue 130. Une tension Vs délivrée au deuxième réseau électrique alternatif 120 est par exemple régulée à une tension crête de 325 V ou une tension efficace de 230V pour une fréquence de 60Hz. Un courant sinusoïdal Is en phase avec la tension Vs circule dans les deuxièmes bornes B2 du circuit d'alimentation sans interruption 100, car dans cet exemple la charge connectée aux deuxièmes bornes B2 est une résistance. Mais le courant Is pourrait être déphasé avec la tension Vs, notamment si la charge était inductive ou capacitive.

A l'instant T1, le premier réseau électrique alternatif 100 est déconnecté du circuit d'alimentation sans interruption 100. La tension VS aux bornes de la source de tension continue 130 diminue car elle alimente alors le deuxième réseau électrique alternatif 120. On constate que la tension Vs et le courant Is ne sont pas impactés par cette déconnection et sont maintenus grâce à l'alimentation de secours fournie par la source de tension continue 130.

A l'instant T2, le premier réseau électrique alternatif 110 est reconnecté au circuit d'alimentation sans interruption 100. On constate à nouveau que la tension Vs et le courant Is conservent leur allure. La tension Vbat aux bornes de la source de tension continue 130 augmente progressivement, grâce à l'énergie fournie par le premier réseau électrique alternatif 110. La vitesse du chargement de la source de tension continue 130 peut être plus ou moins rapide en fonction de la puissance consacrée au chargement par le circuit d'alimentation sans interruption.

Le circuit d'alimentation sans interruption 100 accomplit donc correctement sa fonction d'alimentation de secours pour le deuxième réseau électrique alternatif 120, tout en permettant une charge de la source de tension continue 130 lorsque le premier réseau électrique alternatif 110 est opérationnel.

De façon plus générale, le circuit d'alimentation sans interruption 100 permet des échanges d'énergie dans toutes les directions. Par exemple, la source de tension continue 130 ou le deuxième réseau électrique alternatif 120 peuvent envoyer de l'énergie vers le premier réseau électrique alternatif 110. Ceci est particulièrement avantageux lorsque le premier réseau électrique alternatif 110 connait par ailleurs une forte consommation électrique. Notamment, le deuxième réseau électrique alternatif 120 peut fournir de l'énergie lorsqu'il contient des moyens de production d'énergie, par exemple des moyens de production d'énergie renouvelable décentralisés. Les échanges d'énergie évoqués précédemment entre le premier réseau électrique alternatif 110 et la source de tension continue 130 et/ou entre la source de tension continue 130 et le deuxième réseau électrique alternatif 130 peuvent ainsi être négatifs.

Le circuit d'alimentation sans interruption selon l'invention peut ainsi être utilisé pour le stockage réseau, c'est-à-dire le stockage et la restitution d'énergie entre le premier réseau alternatif 110 et la source de tension continue 130, tout en fournissant une tension alternative de qualité et sans interruption au second réseau électrique alternatif 120.

Dans cette application, durant la phase de stockage, le circuit d'alimentation sans interruption fonctionne 100 de manière à assurer une alimentation sans interruption du deuxième réseau électrique alternatif 120. De l'énergie est prélevée sur le premier réseau électrique alternatif 110 pour assurer la charge de la source de tension continue 130, par exemple par une régulation basée sur une tension de consigne, et pour assurer les besoins du second réseau électrique alternatif 120. Le premier réseau 110 fournit alors le cumul de la puissance nécessaire à la charge de la source de tension continue 130 et de la puissance nécessaire au second réseau 120 (au travers de la source de tension continue).

La phase de déstockage d'énergie correspond à une injection, sur le premier réseau électrique alternatif 110, d'une partie de l'énergie stockée dans la source de tension continue 130. Le circuit d'alimentation sans interruption 100 se comporte alors comme un producteur d'énergie électrique vis-à-vis du premier réseau électrique alternatif 110. Ceci peut être souhaité par exemple pour effectuer des arbitrages de stockage/déstockage en fonction des variations de prix de l'électricité, ou comme un service de soutien à l'équilibre offre-demande d'électricité sur le premier réseau électrique alternatif 110. Ce service peut être par exemple un service d'aide à la régulation de la fréquence sur le premier réseau électrique alternatif 110. Un tel service d'aide à la régulation comprend notamment l'injection sur celui-ci d'une puissance électrique qui est fonction de la déviation de la fréquence du premier réseau électrique alternatif 110 par rapport à sa fréquence de référence, notamment en-dessous de celle-ci. Par exemple, la fréquence de référence est de 50Hz.

Dans la phase de déstockage d'énergie, la puissance à injecter sur le premier réseau électrique alternatif 110 peut être connue. Cette puissance est notamment déstockée à partir de la source de tension continue 130 qui fournit ainsi à la fois la puissance injectée sur le premier réseau électrique alternatif 110 ainsi que la puissance nécessaire au second réseau électrique alternatif 120.

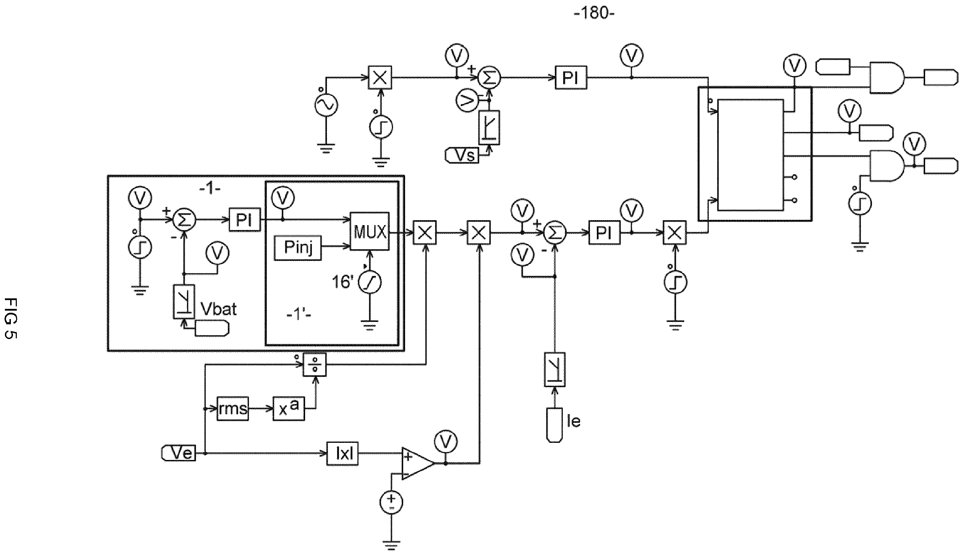

Afin de gérer au mieux la phase de déstockage, le circuit d'alimentation sans interruption 100 peut comprendre une unité de commande 180 représentée schématiquement en figure 5.

Cette unité de commande 180 est similaire à l'unité de commande 170 illustrée en Figure 3, si ce n'est que le premier bloc de contrôle 1 comprend un sous-bloc de contrôle 1'. Le sous-bloc de contrôle 1' permet de sélectionner soit une première puissance déterminée en fonction de la différence entre une tension de consigne et une tension instantanée aux troisièmes bornes B3 du circuit 100, soit une deuxième puissance Pinj à injecter sur le premier réseau électrique alternatif 110. A cet effet, le sous-bloc 1' peut comprendre une unité de sélection MUX qui connecte sélectivement le circuit délivrant la première puissance ou le circuit délivrant la deuxième puissance. Un circuit d'activation 16' peut être utilisé pour activer le sous-bloc 1' lorsque la source de tension continue 130 doit être utilisée pour le déstockage d'énergie par le circuit d'alimentation sans interruption 100. Le sous-bloc de contrôle 1' délivre ensuite la puissance sélectionnée aux blocs de contrôle suivants, en tant que puissance de consigne. Les autres blocs de contrôle fonctionnent comme décrit précédemment.

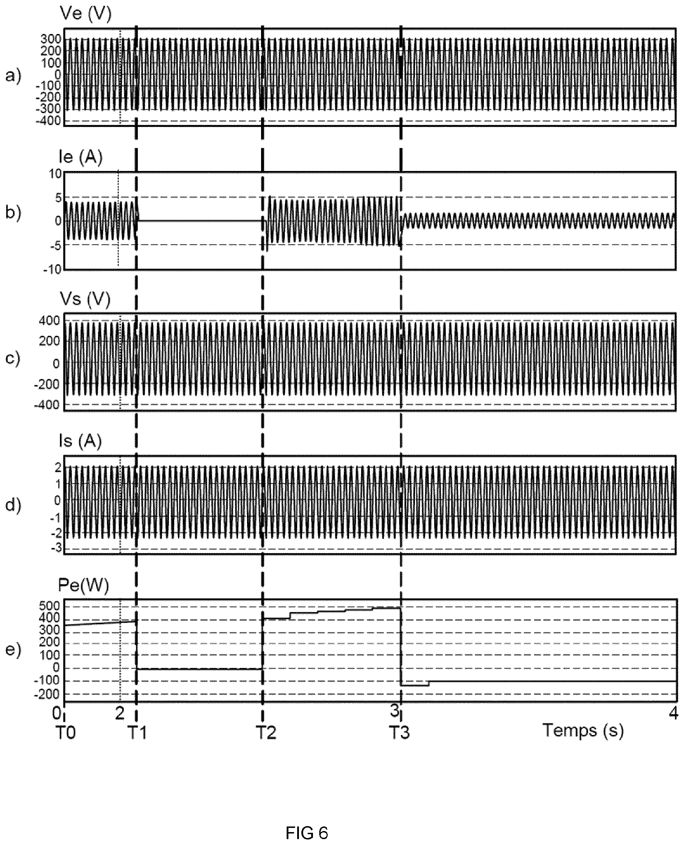

La Figure 6 représente un exemple de courants et de tensions parcourant le circuit d'alimentation 100 lors d'un tel fonctionnement en stockage et déstockage vis-à-vis du premier réseau électrique 110, tout en assurant l'alimentation sans interruption du second réseau électrique 120. Le graphe a) représente la tension Ve du premier réseau électrique alternatif 110. Le graphe b) représente le courant Ie circulant dans les premières bornes B1 du circuit d'alimentation sans interruption 100. Le graphe c) représente la tension Vs délivrée au deuxième réseau électrique alternatif 120. Le graphe d) représente le courant $I_S$ circulant dans les deuxièmes bornes B2 du circuit d'alimentation sans interruption 100. Le graphe e) représente la puissance d'entrée Pe, c'est-à-dire la puissance échangée avec le premier réseau électrique alternatif 110.

Entre l'instant initial T0 et l'instant T3, le circuit sans alimentation 100 fonctionne de façon similaire au fonctionnement illustré en figure 4. Entre l'instant T0 et l'instant T1, le circuit d'alimentation 100 fonctionne de sorte que le premier réseau électrique 110 alimente à la fois la source de tension continue 130 - en la chargeant si besoin - et le second réseau électrique 120. La puissance d'entrée Pe est positive. Puis à l'instant T1, le circuit sans alimentation 100 passe dans un fonctionnement autonome dans lequel le second réseau électrique 120 est alimenté uniquement par la source de tension continue. La puissance d'entrée Pe est alors nulle, puisque le premier réseau électrique 110 est déconnecté. A l'instant T2, le premier réseau électrique 110 devient de nouveau disponible, et recommence à alimenter le second réseau électrique 120, ainsi que recharger la source de tension continue 130 qui a été partiellement déchargée durant la phase de fonctionnement autonome. Comme il est visible en figure 6, après l'instant T2, la puissance d'entrée Pe est supérieure à celle sur la période T0-T1, du fait que la source de tension continue 130 a été en partie déchargée et donc nécessite un rechargement.

Suite à un événement déclencheur à l'instant T3, le circuit sans alimentation 100 passe dans un mode dans lequel il injecte de la puissance électrique sur le premier réseau électrique 110. La puissance d'entrée devient négative et est par exemple régulée à -100W. A cet effet, la puissance de consigne délivrée par le premier bloc de contrôle est de -100W. Suite à la régulation, une puissance électrique de 100W est injectée sur le premier réseau, issue de la source de tension continue 130 ; tandis que le second réseau électrique 120 continue d'être alimenté sans interruption également à partir de de la source de tension continue 130. Cette injection de puissance sur le premier réseau électrique 110 s'effectue typiquement par une injection d'un courant Ie sur le premier réseau électrique 110 en opposition de phase avec la tension Ve du premier réseau électrique 110. La valeur de puissance injectée de 100W est purement illustrative. D'autres valeurs sont possibles en fonction du besoin du premier réseau électrique 110 et des capacités de stockage de la source de tension continue 130 et/ou du deuxième réseau électrique 120.

Le second réseau électrique 120 est correctement alimenté sans interruption durant l'ensemble des phases successives de fonctionnement. Ceci montre le bon fonctionnement du circuit d'alimentation sans interruption 100, notamment dans un contexte de stockage/déstockage réseau ou d'autres services au premier réseau 110 nécessitant d'injecter de l'électricité disponible depuis la source de tension continue 130 ou le deuxième réseau électrique 120.

Ainsi, dans le circuit d'alimentation sans interruption selon un mode de réalisation de l'invention, le premier bloc de contrôle 1 peut être configuré pour déterminer une puissance de consigne à délivrer aux troisièmes bornes B3 du circuit d'alimentation sans interruption 100 en fonction d'une différence entre une tension de consigne $V_{bat0}$ et une tension instantanée $V_{bat}$ aux troisièmes bornes B3 du circuit d'alimentation sans interruption 100, comme par exemple illustré en figures 3 et 5. Le premier bloc de contrôle peut en outre être configuré pour déterminer la puissance de consigne en fonction d'une puissance Pinj à délivrer aux premières bornes B1 du circuit d'alimentation sans interruption 100, comme par exemple illustré en figure 5.

### Revendications

1. Circuit d'alimentation sans interruption (100) en forme de convertisseur à double pont actif comprenant de premières bornes (B1) configurées pour être connectées à un premier réseau électrique alternatif (110), de deuxièmes bornes (B2) configurées pour être connectées à un deuxième réseau électrique alternatif (120), de troisièmes bornes (B3) configurées pour être connectées à une source de tension continue (130), le circuit d'alimentation sans interruption (100) comprenant en outre :

   i. un transformateur (140) comportant un primaire (141) et un premier secondaire (142),
   ii. une première branche électrique (145) comportant ledit primaire (141), la première branche électrique (145) étant connectée à un premier circuit d'interrupteurs (S1) configuré pour permettre un échange d'énergie avec les premières bornes (B1) par l'intermédiaire dudit primaire (141), et
   iii. une deuxième branche électrique (146) comportant ledit premier secondaire (142),
   ladite deuxième branche électrique (146) étant connectée à un deuxième circuit d'interrupteurs (S2) configuré pour permettre un échange d'énergie avec les deuxièmes bornes (B2) par l'intermédiaire dudit premier secondaire (142) ;
circuit d'alimentation sans interruption (100), dans lequel :

i. la première branche électrique (145) comprend une première inductance (L1) connectée en série avec ledit primaire (141),
ii. la deuxième branche électrique (146) comprend une deuxième inductance (L2) connectée en série avec ledit premier secondaire (142),
iii. ledit transformateur (140) comprend en outre un deuxième secondaire (144), un troisième circuit d'interrupteurs (S3) étant connecté audit deuxième secondaire (144) et étant configuré pour permettre un échange d'énergie avec les troisièmes bornes (B3) par l'intermédiaire dudit deuxième secondaire (144),

de manière à permettre des échanges d'énergie entre le premier réseau électrique alternatif (110) et la source de tension continue (130) et entre la source de tension continue (130) et le deuxième réseau électrique alternatif (120).

2. Circuit d'alimentation sans interruption (100) selon la revendication 1, configuré de sorte que les circuits d'interrupteurs (S1, S2, S3) sont commandés par décalages de phase, lesdits échanges d'énergie étant fonction des décalages de phase ($\Phi_{13}$, $\Phi_{32}$) entre le premier, le deuxième, et le troisième circuits (S1, S2, S3).

3. Circuit d'alimentation sans interruption (100) selon la revendication 2, configuré de sorte qu'une tension aux deuxièmes bornes (B2) du circuit d'alimentation sans interruption (100) est déterminée par un décalage de phase ($\Phi_{32}$) entre le troisième circuit (S3) et le deuxième circuit (S2).

4. Circuit d'alimentation sans interruption (100) selon la revendication 2 ou 3, configuré de sorte qu'une tension aux troisièmes bornes (B3) du circuit d'alimentation sans interruption (100) et/ou un courant aux premières bornes (B1) du circuit d'alimentation sans interruption (100) sont déterminés par un décalage de phase ($\Phi_{13}$) entre le premier circuit (S1) et le troisième circuit (S3).

5. Circuit d'alimentation sans interruption (100) selon l'une des revendications 2 à 4, comprenant une unité de commande (170, 180) configurée pour déterminer lesdits décalages de phase ($\Phi_{13}$, $\Phi_{32}$) et commander lesdits interrupteurs en fonction desdits décalages de phase ($\Phi_{13}$, $\Phi_{32}$).

6. Circuit d'alimentation sans interruption (100) selon la revendication précédente, dans lequel ladite unité de commande (170, 180) comprend :

i. un premier bloc de contrôle (1) configuré pour délivrer une puissance de consigne aux troisièmes bornes (B3) du circuit d'alimentation sans interruption (100) ;
ii. un deuxième bloc de contrôle (2) configuré pour déterminer un courant de consigne (Ie) aux premières bornes (B1) du circuit d'alimentation sans interruption (100) en fonction de la dite puissance de consigne et d'une tension instantanée (Ve) aux premières bornes (B1) du circuit d'alimentation sans interruption (100) ;
iii. un troisième bloc de contrôle (3) configuré pour déterminer un décalage de phase ($\Phi_{13}$) entre le premier (S1) et le troisième circuit (S3) en fonction d'une différence entre le courant de consigne et un courant instantané (Ie) aux premières bornes (B1) du circuit d'alimentation sans interruption (100).

7. Circuit d'alimentation sans interruption (100) selon la revendication 6, dans lequel le premier bloc de contrôle (1) est configuré pour délivrer une première puissance de consigne aux troisièmes bornes (B3) du circuit d'alimentation sans interruption (100) en fonction d'une différence entre une tension de consigne ($V_{bat0}$) et une tension instantanée ($V_{bat}$) aux troisièmes bornes (B3) du circuit d'alimentation sans interruption (100).

8. Circuit d'alimentation sans interruption (100) selon la revendication 6, dans lequel le premier bloc de contrôle (1) est configuré pour délivrer une deuxième puissance de consigne en fonction d'une puissance à injecter (Pinj) aux premières bornes (B1) du circuit d'alimentation sans interruption (100).

9. Circuit d'alimentation sans interruption (100) selon les revendications 7 et 8, dans lequel le premier bloc de contrôle (1) est configuré pour délivrer la première puissance de consigne en cas d'un échange d'énergie des premières bornes (B1) vers les troisièmes bornes (B3) ; et pour délivrer la deuxième puissance de consigne en cas d'un échange d'énergie des troisièmes bornes (B3) vers les premières bornes (B1).

**10.** Circuit d'alimentation sans interruption (100) selon l'une des revendications 6 à 9, dans lequel :

   i. le premier bloc de contrôle (1) a une fréquence de mise à jour plus petite, notamment au moins dix fois plus faible, qu'une fréquence du premier réseau électrique alternatif (110) ; et
   ii. le deuxième (2) et le troisième (3) bloc de contrôle ont des fréquences de mise à jour supérieures, notamment au moins vingt fois supérieures, à une fréquence du premier réseau électrique alternatif (110).

**11.** Circuit d'alimentation sans interruption (100) selon l'une des revendications 5 à 10, dans lequel ladite unité de commande (170 ; 180) comprend un quatrième bloc de contrôle (4) configuré pour déterminer le décalage de phase ($\Phi_{32}$) entre le troisième circuit (S3) et le deuxième circuit (S2) en fonction d'une différence entre une tension de consigne ($V_{S0}$) aux deuxièmes bornes (B2) du circuit d'alimentation sans interruption (100) et une tension instantanée ($V_S$) aux deuxièmes bornes (B2) du circuit d'alimentation sans interruption (100).

**12.** Circuit d'alimentation sans interruption (100) selon l'une des revendications 5 à 11, dans lequel ladite unité de commande (170, 180) est configurée de manière à commander deux des trois circuits d'interrupteurs avec des décalages de phase par rapport au circuit d'interrupteur restant, dit « circuit de référence ».

**13.** Circuit d'alimentation sans interruption (100) selon l'une des revendications précédentes, dans lequel les interrupteurs des premier, deuxième, et troisième circuits (S1, S2, S3) forment respectivement un pont complet d'interrupteurs ou un demi-pont d'interrupteurs.

FIG 1

FIG 2

FIG 3

FIG 4

FIG 5

FIG 6

Europäisches
Patentamt

European
Patent Office

Office européen
des brevets

## RAPPORT DE RECHERCHE EUROPEENNE

Numéro de la demande

**EP 23 21 3207**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2019/386509 A1 (LIU ZHENJI [TW] ET AL) 19 décembre 2019 (2019-12-19) * figure 1 * * alinéa [0017] * ----- | 1 | INV. H02J9/06 H02M1/42 H02M3/335 |

**DOMAINES TECHNIQUES RECHERCHES (IPC)**

H02J
H02M

Le présent rapport a été établi pour toutes les revendications

| Lieu de la recherche | Date d'achèvement de la recherche | Examinateur |
|---|---|---|
| Munich | 15 mai 2024 | Castagné, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 21 3207

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-05-2024

| Document brevet cité au rapport de recherche | Date de publication | Membre(s) de la famille de brevet(s) | Date de publication |
|---|---|---|---|
| US 2019386509 A1 | 19-12-2019 | CN 110620423 A | 27-12-2019 |
| | | US 2019386509 A1 | 19-12-2019 |

EPO FORM P0460

Pour tout renseignement concernant cette annexe : voir Journal Officiel de l'Office européen des brevets, No.12/82